# NEUE EUROPÄISCHE PATENTSCHRIFT

(11) **EP 4 063 707 B2**
(45) Veröffentlichungstag und Bekanntmachung des Hinweises auf die Entscheidung über den Einspruch: **18.11.2026**
(45) Hinweis auf die Patenterteilung: 16.08.2023
(21) Anmeldenummer: 21163967.9
(22) Anmeldetag: 22.03.2021
(51) Int. Cl.: F16L 55/165, B32B 1/08, B32B 27/12, B32B 27/30, B32B 27/32, B32B 27/34, B32B 27/36, B32B 27/40, B32B 5/02

(54) **AUSKLEIDUNGSSCHLAUCH**
LINING HOSE
TUBE SOUPLE DE CHEMISAGE

(43) Veröffentlichungstag der Anmeldung: 28.09.2022
(73) Patentinhaber: Rädlinger primus line GmbH, 93413 Cham (DE)
(72) Erfinder: Rädlinger, Werner, 93413 Cham (DE)
(74) Vertreter: Winter, Brandl - Partnerschaft mbB

(56) Entgegenhaltungen:
- DE-C2- 19 941 669
- DE-U1- 9 105 040
- US-A- 4 576 205
- US-A- 5 271 433
- US-A- 6 129 119
- US-A1- 2004 035 485
- US-A1- 2015 369 399
- “Tube-In - Drinking water". Product sheet in the form of a downloadable pdf-file, published on https://mandals.com 06.03.2019. The product sheet is marked “Issue date: 6.3.2019” to prove its publication date. Retrieved 23.11.23. Proof of disclosure can be obtained from archive.org e.g. from this link:http://web.archive.Org/web/20200925233222/https:/mandals.com/products/tubein/
- “Tube-In - Industrial". Product sheet in the form of a downloadable pdf-file, published on https://mandals.com 06.03.2019. The product sheet is marked “Issue date: 6.3.2019” which indicates its publication date. Retrieved 23.11.23. Proof of disclosure can be obtained fromarchive.org e.g. from this link: http://web.archive.Org/web/20200925233222/https:/mandals.com/products/tub ein
- “RTP MANUFACTURING INSPECTION TEST PLAN”. Data sheet explaining properties of the Mandals Tube-In product. Published in 2019.
- MANDALS AS PRODUCT CATALOGUE”. Commercial catalogue published in 2010.
- 203 Phoenix PE & HY”. Excel data sheet with product specifications. Factory datasheet created in 2009.
- “Techn. data on Diolen 164S and Diolen 174S”. Catalogue excerpt from Diolen® Europe disclosing the Diolen 164S polyester yarn. Publicly available June, 2009
- “Techn. data on Diolen 164S and Diolen 174S”. Catalogue excerpt from Diolen® Europe disclosing the Diolen 174S polyester yarn. Publicly available June, 2009.
- “Invoice 68983 Oct.2009 - 02O3PE and 0149PE Lining”. Invoice and shipment confirmation to client of Mandals AS proving sale and delivery of the Mandals lining hose “203 Phoenix” in 2009. Dated 15. October 2009
- Translation of the description of EP 4063707 B1 into English retrieved from Espacenet 30/8/23
- Specs. Phoenix Liner, 1984”. Data sheet publicly available in 1984.
- US counterpart of A1. Publication number: US2022299152A1. Preliminary amended claims included
- First non-final rejection in US prosecution of US2022299152A1.
- Applicant’s response to first non-final rejection in US prosecution of US2022299152A1
- Second non-final rejection in US prosecution of US2022299152A1.
- “Tube In Extension Characteristics”. Excel sheet dated March 2017.
- “Handbook of technical textiles” A R Horrocks and S C Anand Cambridge England

## Beschreibung

Die vorliegende Erfindung betrifft einen Auskleidungsschlauch aufgebaut aus mindestens drei Schlauchschichten, insbesondere zur Sanierung oder Verstärkung / Ergänzung von fluidführenden Systemen. Der Auskleidungsschlauch umfasst mindestens eine innere Schlauchschicht, mindestens eine mittlere Schlauchschicht, die ein aus Kettfäden und Schussfäden gebildetes nahtloses Gewebe aufweist, wobei die Kettfäden in Längsrichtung und die Schussfäden in Umfangsrichtung des Auskleidungsschlauches verlaufen, und mindestens eine äußere Schlauchschicht. Des Weiteren betrifft die Erfindung ein Druckleitungsstück mit diesem Auskleidungsschlauch sowie Verfahren zum Sanieren einer bereits verlegten Altfluidleitung und zum Ergänzen einer (neu verlegten) Druckleitung unter Verwendung des Auskleidungsschlauches.

Bei gattungsgemäßen Schlauchsystemen, die bspw. zum Sanieren von Altfluidleitungen, wie bestehende Frischwasserleitungen oder Abwasserleitungen eingesetzt werden, wird das sogenannte Gewebeschlauch-Relining-Verfahren angewendet. Hierbei wird ein Gewebeschlauch - ein sogenannter Inliner - mit harzdurchtränkter Innenschicht umgestülpt in die zu sanierende Leitung eingebracht, so dass die harzdurchtränkte Schicht außen liegt. Mittels Druckbeaufschlagung wird erreicht, dass die harzdurchtränkte Außenschicht mit der Innenseite der Fluidleitung verklebt. Auf diese Weise lassen sich sanierungsbedürftige Leitungen sanieren.

Diesbezüglich beschreibt bspw. die DE 10 2016 109 843 A1 einen Auskleidungsschlauch zur Sanierung von fluidführenden Systemen mit einem inneren Folienschlauch auf der Basis eines thermoplastischen Kunststoffes, einem äußeren Folienschlauch auf der Basis eines thermoplastischen Kunststoffes und mindestens einem mit einem härtbaren Harz getränkten Faserschlauch zwischen innerem und äußerem Folienschlauch auf der Basis eines Verbundwerkstoffes aus industriell erzeugten anorganischen Fasern, Naturfasern oder Mineralfasern und Chemiefasern.

Jene bekannte, mit härtbarem Harz getränkte Faserschläuche haben jedoch den Nachteil, dass der Sanierungsschlauch fest anliegend mit der Altfluidleitung flächig verklebt werden muss. Die saubere und zuverlässige Verklebung erfordert eine äußerst aufwendige Vorbearbeitung der Metalloberfläche an der Innenseite der Altfluidleitung (reinigen, sandstrahlen, entgraten), was mit sehr hohen Kosten verbunden ist. Dieser Sanierungsschlauch hat materialbedingt eine geringe Gasdichtigkeit. Aufgrund dessen führt eine Verklebungsfehlstelle zu einem Gasdruckaufbau zwischen Rohr und Schlauch, was zum Ablösen des Sanierungsschlauchs führen kann. Das Einbringen des Sanierungsschlauchs in das Altrohr durch das Umstülpverfahren mittels Pressluft und Reversionskammer begrenzt die Sanierungslänge zudem auf maximal 250 m.

Es sind daher, wie zum Beispiel durch die DE 199 41 669 C2 offenbart, auch andere Gewebeschläuche bekannt, die für Hochdruckfluidleitungen mit einem aus Kett- und Schussfäden gebildeten Gewebe aus Hochleistungsfasern, welches Gewebe zwischen einer Innen- und einer Außenbeschichtung aus thermoplastischem Kunststoff angeordnet ist, einsetzbar sind. Weiterer Stand der Technik ist aus der US 4 576 205 A und der DE 91 05 040 U1 bekannt.

Obgleich sich mit diesen bekannten Gewebeschläuchen Druckleitungen an sich zuverlässig sanieren lassen, haften ihnen dennoch weitere Nachteile an. Bekannte Auskleidungsschläuche sind nur relativ bedingt in Druckleitungen mit stärker schwankenden Durchmessern einsetzbar. Insbesondere bei korrosionsbedingt oder durch vorangegangene Flickarbeiten verursacht relativ stark variierendem Innendurchmesser der Altfluidleitungen ist es notwendig, dass der Auskleidungsschlauch sich diesen Durchmesserschwankungen anpasst, ohne bei Druckbelastung eine Beschädigung der Schichten, etwa des Gewebes, zu riskieren. Auch im Bereich von Verbindern, mittels derer zwei Druckleitungsabschnitte miteinander verbunden werden, unterliegt der Auskleidungsschlauch relativ hohen radialen Kräften. Aufgrund dessen muss man bisher häufig für verschiedene Durchmesser der zu sanierenden Systeme jeweils verschiedene Auskleidungsschläuche mit angepassten Durchmessern bereitstellen.

Es ist daher Aufgabe der vorliegenden Erfindung, einen Auskleidungsschlauch bereitzustellen, der unter Bewerkstelligung eines möglichst geringen Einbauaufwandes gegenüber variierenden Durchmessern in den zu ergänzenden fluidführenden Systemen beständiger ausgebildet ist.

Dies wird erfindungsgemäß dadurch gelöst, dass die Schussfäden eine größere Elastizität aufweisen als die Kettfäden.

Somit wird ein Auskleidungsschlauch zur Verfügung gestellt, dessen Flexibilität in radialer Richtung deutlich gesteigert wird. Damit können auch Druckleitungen saniert oder ergänzt werden, die größere Abweichungen im Durchmesser in Bezug auf den Nenndurchmesser aufweisen. Das Gewebe des Auskleidungsschlauches wird auch nach einer erneuten Druckbelastung der mit dem Auskleidungsschlauch versehenen Druckleitung nicht beschädigt und ist folglich möglichst langlebig ausgebildet. Zugleich können die Kettfäden möglichst dehnungsarm / steif ausgeführt werden, um das Einziehen des Auskleidungsschlauches in die bestehende Druckleitung zu ermöglichen.

Erfindungsgemäß weisen die Schussfäden eine zwei- bis zwanzigfach, vorzugsweise sieben- bis zwölffach, höhere Elastizität auf als die Kettfäden. Die Schussfäden enthalten Fasern aus Polyphenylensulfid oder bestehen vollständig aus Polyphenylensulfid und die Kettfäden enthalten Fasern aus Aramid, Aramid-Copolymer, Basalt, Carbon, und/oder Glasfaser oder bestehen vollständig aus Aramid, Aramid-Copolymer, Basalt, Carbon, und/oder Glasfaser. Dadurch wird die radiale Flexibilität des gesamten Auskleidungsschlauches weiter erhöht und ein möglichst vielseitig einsetzbarer Auskleidungsschlauch ausgebildet. Die Kettfäden sind möglichst effizient herstellbar.

Weitergehende vorteilhafte Ausführungsformen sind mit den Unteransprüchen beansprucht und nachfolgend näher erläutert.

Vorteilhaft ist es zudem, wenn die mindestens drei Schlauchschichten derart ausgebildet sind, dass der Auskleidungsschlauch zwischen einem drucklosen Zustand und einem druckbeaufschlagten Zustand seines Innenraums eine Durchmessererweiterung zwischen 5% und 50%, vorzugsweise zwischen 10% und 20%, besonders bevorzugt um 15%, vollzieht. Dadurch lassen sich die üblicherweise auftretenden Durchmesserschwankungen möglichst geschickt ausgleichen. Unter dem druckbeaufschlagten Zustand ist ein Zustand zu verstehen, in dem im Innenraum des Auskleidungsschlauches (je nach gewähltem Außendurchmesser) ein bestimmter Druck anliegt, sodass sich der Auskleidungsschlauch eng an eine Innenwandung des zu sanierenden Rohres anlegt ("tight fit").

Weist der Auskleidungsschlauch (in dem druckbeaufschlagten / expandierten Zustand) einen Außendurchmesser zwischen 100 mm und 1000 mm auf, ist er möglichst vielseitig in bestehende Druckleitungen einsetzbar.

Als besonders vorteilhaft hat es sich zudem herausgestellt, wenn die Schussfäden und/oder die Kettfäden (und/oder alle weiteren Bestandteilen des Auskleidungsschlauches) beständig gegenüber (insbesondere bei der Erdölgewinnung geförderten / auftretenden) Fluiden, vorzugsweise Rohöl und/oder aus Rohöl hergestellten Kraftstoffen / Treibstoffen, wie Benzin oder Diesel, und/oder anderen aus Rohöl raffinierten Produkten, und/oder aggressivem Industrieabwasser sind/ist. Dadurch ist der Auskleidungsschlauch möglichst vielseitig einsetzbar.

Wenn die Schussfäden und/oder die Kettfäden (und/oder alle weiteren Bestandteilen des Auskleidungsschlauches) beständig gegenüber Temperaturen bis 80°, weiter bevorzugt gegenüber Temperaturen bis 120° C sind/ist, wird der Einsatzbereich des Auskleidungsschlauches, insbesondere in der Öl- und Gasindustrie, nochmals erweitert. Gesamtheitlich wird dadurch ein alterungsbeständiger Auskleidungsschlauch zur Verfügung gestellt.

Alternativ zu dem zuvor erläuterten bevorzugten Einsatzbereich des Auskleidungsschlauches zur Förderung von Rohöl, etc., ist der Auskleidungsschlauch gemäß einer weiter bevorzugten Ausführungsform zur Förderung von (kaltem) Frischwasser-/ in Trinkwasserleitungen eingesetzt.

Hinsichtlich der inneren und äußeren Schlauchschichten hat es sich für eine effiziente Herstellung auch als zuträglich erwiesen, wenn ein Material der inneren Schlauchschicht und/oder ein Material der äußeren Schlauchschicht ein polymerer, vorzugsweise thermoplastischer, Werkstoff ist.

Bezüglich des Materials der inneren Schlauchschicht hat es sich für eine wirtschaftliche Herstellung auch als vorteilhaft erwiesen, wenn der thermoplastische Kunststoff der inneren Schlauchschicht ausgewählt ist aus der Gruppe bestehend aus Polyolefin, Polyamid, Polyether, Polyester, Polyurethan, Fluorpolymere, wie etwa Polyvinylidenfluorid, oder Mischungen daraus.

Bezüglich des Materials der äußeren Schlauchschicht hat es sich für eine wirtschaftliche Herstellung auch als vorteilhaft erwiesen, wenn der thermoplastische Kunststoff ausgewählt ist aus der Gruppe bestehend aus Polyolefin, Polyamid, Polyether, Polyester, Polyurethan, Fluorpolymere, wie etwa Polyvinylidenfluorid, oder Mischungen daraus.

Die entsprechenden Schlauchschichten (die innere Schlauchschicht, die mittlere Schlauchschicht und die äußere Schlauchschicht) stehen dabei vorzugsweise miteinander in Kontakt. Insbesondere stehen die Schlauchschichten dabei über ihre Manteloberflächen (innere Manteloberfläche und/oder äußere Manteloberfläche) miteinander in Kontakt.

Als vorteilhaft hat es sich herausgestellt, wenn die innere Schlauchschicht und/oder die äußere Schlauchschicht eine Dicke zwischen 1 mm und 4 mm, vorzugsweise eine Dicke um 2 mm, aufweisen.

Weist der Auskleidungsschlauch eine Länge zwischen 1000 m und 4000 m auf, können möglichst lange Strecken von Druckleitungen oder Altfluidleitungen in einem Zuge (ohne Unterbrechung und ohne Zwischenverbindungen) fertig gestellt werden.

Bevorzugt beträgt die Kettfadenstärke des Gewebes mindestens 4000 dtex und höchstens 15000 dtex. Ganz besonders bevorzugt beträgt die Kettfadenstärke des Auskleidungsschlauches mindestens 6000 dtex und höchstens 12000 dtex.

Bevorzugt beträgt die Schussfadenstärke des Gewebes mindestens 15000 dtex und höchstens 25000 dtex.

Ferner betrifft die Erfindung ein Druckleitungsstück zur Förderung von Fluid, mit einem, vorzugsweise aus Metall, wie Stahl, bestehenden Außenrohr und einem von innen an dem Außenrohr anliegenden erfindungsgemäßen Auskleidungsschlauch nach zumindest eine der zuvor beschriebenen Ausführungsformen.

Zudem betrifft die Erfindung ein Verfahren zum Sanieren einer bereits verlegten Altfluidleitung, wobei zunächst ein erfindungsgemäßer Auskleidungsschlauch nach zumindest eine der zuvor beschriebenen Ausführungsformen in die Altfluidleitung eingezogen wird und im Anschluss der Auskleidungsschlauch derart mit einem Innendruck beaufschlagt wird, dass sich der Auskleidungsschlauch von innen an die Altfluidleitung anlegt.

Auch betrifft die Erfindung ein Verfahren zum Ergänzen einer (neu verlegten) Druckleitung umfassend folgende Schritte:
a) Bereitstellung einer Druckleitung, und
b) Einziehen eines erfindungsgemäßen Auskleidungsschlauches nach zumindest eine der zuvor beschriebenen Ausführungsformen in die Druckleitung.

Als Fluid wird gegenständlich allgemein ein Medium bezeichnet, welches einer beliebig langsamen Scherung keinen Widerstand entgegensetzt. Der übergeordnete Begriff Fluid bezeichnet Gase und Flüssigkeiten, da die meisten physikalischen Gesetze für beide Aggregatszustände gleichermaßen gelten und sich viele der Eigenschaften nur quantitativ nicht aber qualitativ unterscheiden.

Unter Geweben werden im Allgemeinen flächenförmige Textilerzeugnisse aus mindestens zwei rechtwinklig gekreuzten Fadensystemen verstanden, wobei der sogenannte Kettfaden in Längsrichtung und der sogenannte Schussfaden senkrecht dazu verlaufen.

Weitere Einzelheiten, Aspekte und Vorteile der vorliegenden Erfindung ergeben sich aus der nachfolgenden Beschreibung von Ausführungsformen anhand der Zeichnungen.

Es zeigen:
Figur 1 eine perspektivische Teilschnittdarstellung eines nach einem bevorzugten Ausführungsbeispiel ausgebildeten erfindungsgemäßen Auskleidungsschlauches, wobei ein dreischichtiger Aufbau des Auskleidungsschlauches gut zu erkennen ist,
Figur 2 eine Detailansicht eines in Fig. 1 bevorzugt eingesetzten Gewebes unter Darstellung verschiedener Kett- und Schussfäden,
Figur 3 eine Detailansicht eines alternativ zu Figur 2 umgesetzten Gewebes unter Darstellung verschiedener Kett- und Schussfäden,
Figur 4 eine schematische Darstellung des in dem Auskleidungsschlauch nach Fig. 1 umgesetzten Dreischichtaufbaus, sowie
Fig. 5 eine schematische Darstellung eines Verfahrensablaufes zur Herstellung eines Druckleitungsstückes unter Verwendung des erfindungsgemäßen Auskleidungsschlauches.

Die Figuren sind lediglich schematischer Natur und dienen daher ausschließlich dem Verständnis der Erfindung. Die gleichen Elemente sind mit denselben Bezugszeichen versehen.

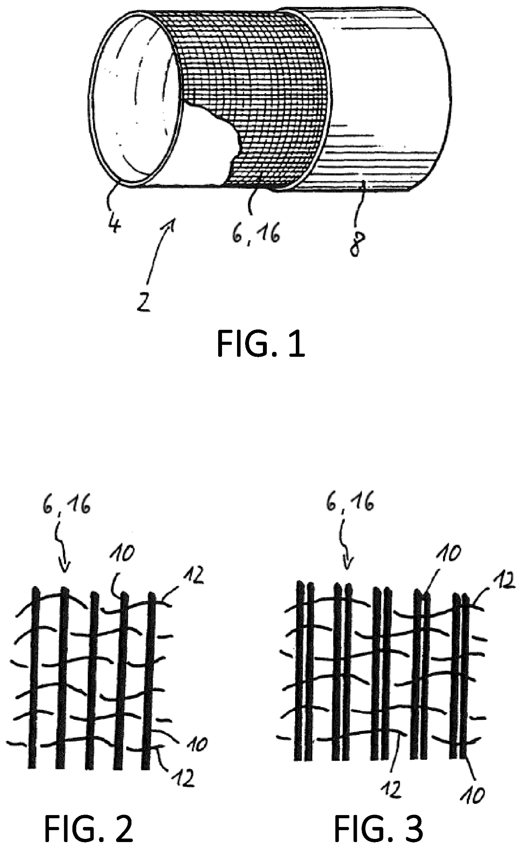

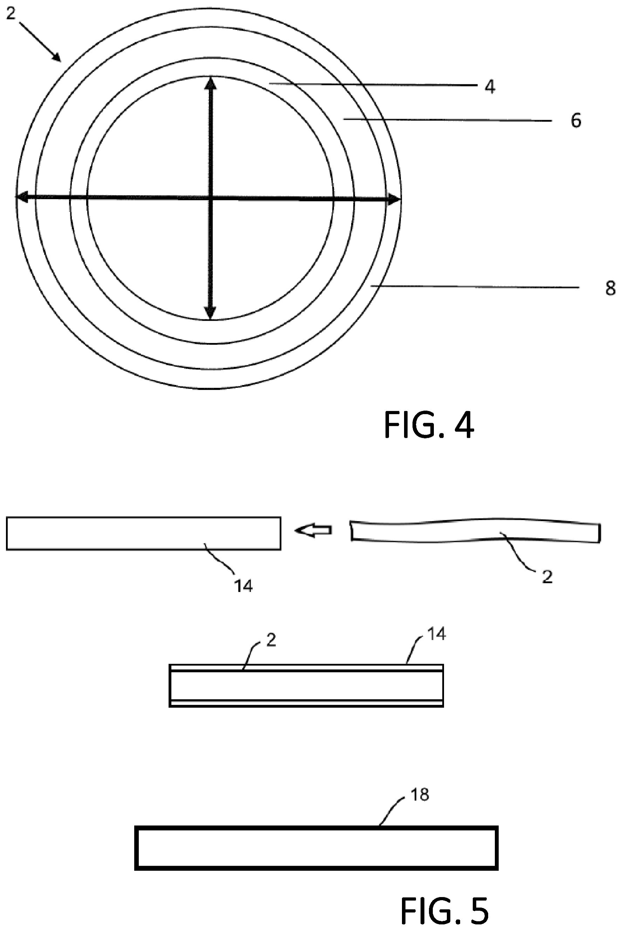

Ein erfindungsgemäßer Auskleidungsschlauch 2 weist gemäß Figuren 1 und 4 einen dreischichtigen Aufbau bestehend aus einer inneren Schlauchschicht 4, einer mittleren Schlauchschicht 6, umfassend ein Gewebe 16, und einer äußeren Schlauchschicht 8 auf. Der Auskleidungsschlauch 2 wird erfindungsgemäß, wie nachfolgend in Verbindung mit Figur 5 erläutert, entweder zur Innenbeschichtung neuer Druckleitungsstücke 18, zur Ergänzung / Verstärkung bereits verlegter neuer Druckleitungen oder alternativ zur Sanierung von bereits verlegten Altfluidleitungen, die etwa korrosionsbedingt an Festigkeit verloren haben, eingesetzt.

Der Auskleidungsschlauch 2 weist eine gesamtheitlich flexible Struktur auf. Bevorzugt ist der Auskleidungsschlauch 2 vor dem Einbringen in eine Druckleitung auf eine Transportspule aufgewickelt. Der Auskleidungsschlauch 2 ist dabei derart flexibel ausgebildet, dass er in diesem Transportzustand zusammengelegt ist, d.h. dass sich zumindest zwei einander gegenüberliegende Innenumfangsbereiche des Auskleidungsschlauches 2 berühren. Auf übliche Weise ist der Auskleidungsschlauch 2 zu einer doppelwandigen U-Form zusammengelegt.

Die innere Schlauchschicht 4 hat auf typische Weise ein hohes Maß an Dichtigkeit und Beständigkeit gegenüber dem zu transportierenden Fluid. Des Weiteren schützt sie die mittlere Schlauchschicht 6 von der Schlauchinnenseite her.

In einem bevorzugten Einsatzbereich des Auskleidungsschlauches 2 in Rohöl-führenden Druckleitungen ist das Material der inneren Schlauchschicht 4 ein flexibler thermoplastischer Kunststoff, hier ein thermoplastisches Polyurethan. In weiteren Ausführungen sind auch andere Materialien, wie Polyolefin, Polyamid, Polyether, Polyester, Fluorpolymere, wie etwa Polyvinylidenfluorid, oder Mischungen daraus als Material für die innere Schlauchschicht 4 eingesetzt.

Im Falle von Wasserleitungen wird vorzugsweise flexibles Polyethylen für das Material der inneren Schlauchschicht 4 verwendet.

Die äußere Schlauchschicht 8 hat die Funktion, die mittlere Schlauchschicht 6 vor Einwirkungen von außen her zu schützen. Hierunter fällt insbesondere die mechanische Belastung beim Einziehen des Schlauches und der Einfluss durch Verwitterung, beispielsweise Feuchtigkeit und Mikroorganismen. Als Material für die äußere Schlauchschicht 8 wird bevorzugt flexibler thermoplastischer Kunststoff verwendet. Je nach Einsatzzweck und Oberflächenbeschaffenheit der inneren Umfangswand des zu sanierenden Rohres sind hierfür beispielsweise Polyethylen (m-LLD-PE, LLD-PE, LD-PE und MD-PE), Polypropylen, thermoplastisches Polyurethan oder Weich-PVC verwendbar. Auch Polyolefin, Polyamid, Polyether, Polyester, Polyurethan, Fluorpolymere, wie etwa Polyvinylidenfluorid, oder Mischungen daraus sind wiederum für das Material für die äußere Schlauchschicht 8 einsetzbar.

Das in der mittleren Schlauchschicht 6 umfasste Gewebe 16 des Auskleidungsschlauches 2 wird auf einem Rundwebstuhl aus Schussfäden 10 und Kettfäden 12 gewebt, wie diese in Figur 2 näher dargestellt sind. Die Schussfäden 10 verlaufen in Umfangsrichtung des Auskleidungsschlauches 2 und die Kettfäden 12 verlaufen in Längsrichtung des Auskleidungsschlauches 2. Für die Kettfäden 12 sind hochfeste und hochmodule Fasern in hoher Fadenstärke und hoher Webdichte aus Aramid eingesetzt. In weiteren Ausführungen variiert das Material der Kettfäden 12, wobei alternativ Fasern aus Aramid-Copolymer, Basalt, Carbon, und/oder Glasfaser eingesetzt sind oder die Kettfäden 12 vollständig aus diesen Fasern hergestellt sind.

Erfindungsgemäß sind die Schussfäden 10 aus einem anderen Material als die Kettfäden 12 hergestellt, wobei die Schussfäden 10 eine größere Elastizität, d. h. eine höhere zerstörungsfreie Dehnbarkeit, aufweisen als die Kettfäden 12. Dadurch ergibt sich die Möglichkeit, den Auskleidungsschlauch 2 im Durchmesser an die schwankenden Durchmesserverhältnisse der Druckleitung oder Altfluidleitung anzupassen.

In dem mit den Figur 1 und 2 dargestellten Ausführungsbeispiel bestehen die Schussfäden 10 vollständig aus einem Polyphenylensulfid. Dadurch ergibt sich ein leistungsfähiger und alterungsbeständiger Auskleidungsschlauch 2, der sowohl beständig gegenüber bei der Erdölgewinnung geförderten Fluiden, insbesondere Rohöl, als auch beständig gegenüber Temperaturen bis 120 °C ausgebildet ist, ohne dass die Schussfäden 10 geschädigt werden oder reißen.

Der Vollständigkeit halber sei darauf hingewiesen, dass der Auskleidungsschlauch 2 alternativ zur Förderung von kaltem Frischwasser / Trinkwasser eingesetzt ist.

Zudem ist es möglich, gemäß der Figur 3 das Gewebe 16 der mittleren Schlauchschicht 6 alternativ zu dem ersten Ausführungsbeispiel mit doppelten Schussfäden 10 und/oder gemäß weiteren Ausführungsformen mit doppelten Kettfäden 12 zu weben. Diesbezüglich sei auch auf die EP 0 535 203 B1 verwiesen, in der eine Rundwebmaschine mit kontinuierlichem Litzenhub offenbart ist, was zu besonders hoher Qualität der mittleren Schlauchschicht 6, umfassend das Gewebe 16, führt.

Die Schlauchschichten 4, 6, 8 können prinzipiell auch jeweils mehrfach vorgesehen werden. In weiteren, der Kürze wegen nicht näher dargestellten Ausführungsformen sind demnach auch mehr als eine innere Schlauchschicht 4 und/oder mehr als eine äußere Schlauchschicht 8 und/oder mehr als eine mittlere Schlauchschicht 6 vorhanden.

Mit Figur 5 ist schematisch ein Verfahren zur Herstellung eines Druckleitungsstückes 18 dargestellt. Dabei wird in einem ersten Schritt ein Außenrohr 14, vorzugsweise in Form eines Stahlrohres, zur Verfügung gestellt. Auch wird der Auskleidungsschlauch 2 zur Verfügung gestellt. Dies ist in einer oberen Teildarstellung der Figur 5 zu erkennen.

Im Anschluss daran wird in einem zweiten Schritt der Auskleidungsschlauch 2 in das Außenrohr 14 eingezogen, was in der mittleren Teildarstellung der Figur 5 zu erkennen ist. Hierzu ist der Auskleidungsschlauch 2 bevorzugt in seiner Querschnittsform zusammengelegt.

Schließlich wird in einem dritten Schritt der Auskleidungsschlauch 2 von innen mit Druck beaufschlagt, sodass sich der Auskleidungsschlauch 2 entfaltet und (mit seiner äußeren Schlauchschicht 8) vollumfänglich von innen an das Außenrohr 14 anlegt, unter Ausbildung des fertigen Druckleitungsstückes 18.

Diesbezüglich sei darauf hingewiesen, dass bei einem der Übersichtlichkeit nicht separat dargestellten Verfahren zur Verstärkung / Ergänzung einer (neuen) Druckleitung oder zur Sanierung einer Altfluidleitung auf gleiche Weise vorgegangen wird. Die Druckleitung oder die Altfluidleitung liegen dann in dem ersten Schritt bereits als XYZ-System vor; zusätzlich wird der Auskleidungsschlauch 2 in derselben Länge oder in einer größeren Länge als die Druckleitung oder Altfluidleitung zur Verfügung gestellt.

In dem zweiten Schritt wird der Auskleidungsschlauch 2 wiederum in die bereits unterirdisch verlegte Druckleitung oder die bereits bestehende Altfluidleitung eingezogen. In dem dritten Schritt wird der Auskleidungsschlauch 2 mit Druck beaufschlagt und somit von innen an die Druckleitung oder die Altfluidleitung angelegt.

In der nachfolgenden Tabelle 1 sind die wesentlichen Daten bevorzugter Ausführungsformen des erfindungsgemäßen Auskleidungsschlauches 2 nach den Figuren zusammengefasst.

**Tabelle 1**

| | **Gewebeschlauch basierend auf einem Polyphenylensulfid** |
|---|---|
| **innere Schlauchschicht** | Thermoplastisches Polyurethan (TPU) |
| | 2 mm |
| **äußere Schlauchschicht** | TPU |
| | 2 mm |
| **Gewebefaser** | Kettfäden: Aramid; Schussfäden: PPS |
| **Kettfadenstärke** | 8000 dtex |
| **Schussfadenstärke** | 18000 dtex |
| **Gewebeart** | Köper |
| **Berstdruck** | 5-30 bar |
| **Schlauchlänge** | 4.000 m |

### Bezugszeichenliste

- 2: Auskleidungsschlauch
- 4: innere Schlauchschicht
- 6: mittlere Schlauchschicht
- 8: äußere Schlauchschicht
- 10: Schussfaden
- 12: Kettfaden
- 14: Außenrohr
- 16: Gewebe
- 18: Druckleitungsstück

## Patentansprüche

1. Auskleidungsschlauch (2) aufgebaut aus mindestens drei Schlauchschichten (4, 6, 8), insbesondere zur Sanierung von fluidführenden Systemen, umfassend
a) mindestens eine innere Schlauchschicht (4),
b) mindestens eine mittlere Schlauchschicht (6), die ein aus Kettfäden (12) und Schussfäden (10) gebildetes nahtloses Gewebe (16) aufweist, wobei die Kettfäden (12) in Längsrichtung und die Schussfäden (10) in Umfangsrichtung des Auskleidungsschlauches (2) verlaufen, und
c) mindestens eine äußere Schlauchschicht (8),
**dadurch gekennzeichnet, dass**
die Schussfäden (10) eine größere Elastizität aufweisen als die Kettfäden (12), wobei die Schussfäden (10) eine zwei- bis zwanzigfach höhere Elastizität aufweisen als die Kettfäden (12), wobei die Schussfäden (10) Fasern aus Polyphenylensulfid enthalten oder vollständig aus Polyphenylensulfid bestehen und die Kettfäden (12) Fasern aus Aramid, Aramid-Copolymer, Basalt, Carbon, und/oder Glasfaser enthalten oder vollständig aus Aramid, Aramid-Copolymer, Basalt, Carbon, und/oder Glasfaser bestehen.

2. Auskleidungsschlauch (2) nach Anspruch 1, **dadurch gekennzeichnet, dass** die mindestens drei Schlauchschichten (4, 6, 8) derart ausgebildet sind, dass der Auskleidungsschlauch (2) zwischen einem drucklosen Zustand und einem druckbeaufschlagten Zustand eine Durchmessererweiterung zwischen 5% und 50% vollzieht.

3. Auskleidungsschlauch (2) nach Anspruch 1 oder 2, **dadurch gekennzeichnet, dass** der Auskleidungsschlauch (2) einen Außendurchmesser zwischen 100 mm und 1000 mm aufweist.

4. Auskleidungsschlauch (2) nach einem der Ansprüche 1 bis 3, **dadurch gekennzeichnet, dass** die Schussfäden (10) und/oder die Kettfäden (12) beständig gegenüber Rohöl und/oder aus Rohöl hergestellten Kraftstoffen sind/ist.

5. Auskleidungsschlauch (2) nach einem der Ansprüche 1 bis 4, **dadurch gekennzeichnet, dass** die Schussfäden (10) und/oder die Kettfäden (12) beständig gegenüber Temperaturen bis 120° C sind/ist.

6. Auskleidungsschlauch (2) nach einem der Ansprüche 1 bis 5, **dadurch gekennzeichnet, dass** ein Material der inneren Schlauchschicht (4) und/oder der äußeren Schlauchschicht (8) ein polymerer Werkstoff ist.

7. Druckleitungsstück (18) zur Förderung von Fluid, mit einem Außenrohr (14) und einem von innen an dem Außenrohr (14) anliegenden Auskleidungsschlauch (2) nach einem der Ansprüche 1 bis 6.

8. Verfahren zum Sanieren einer bereits verlegten Altfluidleitung, wobei zunächst ein Auskleidungsschlauch (2) nach einem der Ansprüche 1 bis 6 in die Altfluidleitung eingezogen wird und im Anschluss der Auskleidungsschlauch (2) derart mit einem Innendruck beaufschlagt wird, dass sich der Auskleidungsschlauch (2) von innen an die Altfluidleitung anlegt.

9. Verfahren zum Ergänzen einer Druckleitung umfassend folgende Schritte:
a) Bereitstellung einer Druckleitung, und
b) Einziehen eines Auskleidungsschlauches (2) nach einem der Ansprüche 1 bis 6 in die Druckleitung.

## Claims

1. Lining hose (2) constructed from at least three hose layers (4, 6, 8), in particular for the rehabilitation of fluid-carrying systems, comprising:
a) at least one inner hose layer (4),
b) at least one middle hose layer (6) comprising a seamless fabric (16) formed from warp threads (12) and weft threads (10), the warp threads (12) running in the longitudinal direction and the weft threads (10) running in the circumferential direction of the lining hose (2), and
c) at least one outer hose layer (8),
**characterized in that** the weft threads (10) exhibit a greater elasticity than the warp threads (12), wherein the weft threads (10) exhibit an elasticity which is two to twenty times higher than that of the warp threads (12), wherein the weft threads (10) contain fibres of polyphenylene sulphide or are made entirely of polyphenylene sulphide and the warp threads (12) contain fibres of aramid, aramid copolymer, basalt, carbon and/or glass fibre or are made entirely of aramid, aramid copolymer, basalt, carbon and/or glass fibre.

2. The lining hose (2) according to claim 1, **characterized in that** the at least three hose layers (4, 6, 8) are formed in such a way that the lining hose (2) expands in diameter by between 5% and 50% between a pressureless state and a pressurized state.

3. Lining hose (2) according to claim 1 or 2, **characterized in that** the lining hose (2) has an outer diameter of between 100 mm and 1000 mm.

4. Lining hose (2) according to any one of claims 1 to 3, **characterized in that** the weft threads (10) and/or the warp threads (12) are resistant to crude oil and/or fuels produced from crude oil.

5. Lining hose (2) according to any one of claims 1 to 4, **characterized in that** the weft threads (10) and/or the warp threads (12) are resistant to temperatures of up to 120°C.

6. Lining hose (2) according to any one of claims 1 to 5, **characterized in that** a material of the inner hose layer (4) and/or the outer hose layer (8) is a polymeric material.

7. A pressure pipeline section (18) for conveying a fluid, comprising an outer tube (14) and a lining hose (2) according to any one of claims 1 to 6, the lining hose (2) bearing against the outer tube (14) from the inside.

8. A method for rehabilitating a previously laid existing fluid line, wherein a lining hose (2) according to any one of claims 1 to 6 is first drawn into the existing fluid line and then the lining hose (2) is subjected to an internal pressure in such a way that the lining hose (2) bears against the existing fluid line from the inside.

9. A method for supplementing a pressure pipeline comprising the following steps:
a) providing a pressure pipeline, and
b) pulling a lining hose (2) according to any one of claims 1 to 6 into the pressure pipeline.

## Revendications

1. Tuyau de revêtement (2) constitué d'au moins trois couches de tuyau (4, 6, 8), en particulier pour l'assainissement de systèmes véhiculant des fluides, comprenant
a) au moins une couche de tuyau intérieure (4),
b) au moins une couche de tuyau centrale (6), qui présente un tissu sans couture (16) formé de fils de chaîne (12) et de fils de trame (10), dans lequel les fils de chaîne (12) s'étendent dans le sens longitudinal et les fils de trame (10) dans le sens périphérique du tuyau de revêtement (2), et
c) au moins une couche de tuyau extérieure (8),
**caractérisée en ce que**
les fils de trame (10) présentent une plus grande élasticité que les fils de chaîne (12), dans lequel les fils de trame (10) présentent une élasticité deux à vingt fois plus élevée que les fils de chaîne (12), dans lequel les fils de trame (10) contiennent des fibres en polysulfure de phénylène ou sont entièrement constitués de polysulfure de phénylène, et les fils de chaîne (12) contiennent des fibres d'aramide, de copolymère d'aramide, de basalte, de carbone et/ou de fibre de verre, ou sont entièrement constitués d'aramide, de copolymère d'aramide, de basalte, de carbone et/ou de fibre de verre.

2. Tuyau de revêtement (2) selon la revendication 1, **caractérisé en ce que** les au moins trois couches de tuyau (4, 6, 8) sont formées de sorte que le tuyau de revêtement (2) subit un élargissement de diamètre compris entre 5 % et 50 % entre un état sans pression et un état sous pression.

3. Tuyau de revêtement (2) selon la revendication 1 ou 2, **caractérisé en ce que** le tuyau de revêtement (2) présente un diamètre extérieur compris entre 100 mm et 1000 mm.

4. Tuyau de revêtement (2) selon l'une quelconque des revendications 1 à 3, **caractérisé en ce que** les fils de trame (10) et/ou les fils de chaîne (12) sont résistants au pétrole brut et/ou aux carburants fabriqués à partir de pétrole brut.

5. Tuyau de revêtement (2) selon l'une quelconque des revendications 1 à 4, **caractérisé en ce que** les fils de trame (10) et/ou les fils de chaîne (12) sont résistants à des températures allant jusqu'à 120 °C.

6. Tuyau de revêtement (2) selon l'une quelconque des revendications 1 à 5, **caractérisé en ce qu'un** matériau de la couche de tuyau intérieure (4) et/ou de la couche de tuyau extérieure (8) est un matériau polymère.

7. Pièce de conduites de refoulement (18) pour le transport de fluide, avec un tuyau extérieur (14) et un tuyau de revêtement (2) appliqué de l'intérieur contre le tuyau extérieur (14) selon l'une quelconque des revendications 1 à 6.

8. Procédé d'assainissement d'une conduite de fluide usagé déjà installée, dans lequel un tuyau de revêtement (2) selon l'une quelconque des revendications 1 à 6 est d'abord aspiré dans la conduite de fluide usagé, puis le tuyau de revêtement (2) est soumis à une pression interne de sorte que le tuyau de revêtement (2) s'applique de l'intérieur contre la conduite de fluide usagé.

9. Procédé de complément d'une conduite de refoulement, comprenant les étapes suivantes :
a) mise à disposition d'une conduite de refoulement, et
b) introduction d'un tuyau de revêtement (2) selon l'une quelconque des revendications 1 à 6 dans la conduite de refoulement.
